# EUROPEAN PATENT APPLICATION

(11) **EP 4 422 319 A1**
(43) Date of publication of application: **28.08.2024**
(21) Application number: 22909718.3
(22) Date of filing: 05.12.2022
(51) Int. Cl.: H04W 72/04, H04W 72/12, H04W 74/00

(54) **BUFFER STATE REPORT SENDING METHOD AND COMMUNICATION APPARATUS**

(30) Priority: 25.12.2021 CN 202111605541
(71) Applicant: Huawei Technologies Co., Ltd., Shenzhen, Guangdong 518129 (CN)
(72) Inventor: CAO, Youlong, Shenzhen, Guangdong 518129 (CN); CHEN, Erkai, Shenzhen, Guangdong 518129 (CN); LIAO, Shuri, Shenzhen, Guangdong 518129 (CN); XU, Rui, Shenzhen, Guangdong 518129 (CN); DOU, Shengyue, Shenzhen, Guangdong 518129 (CN)
(74) Representative: Thun, Clemens
(86) International application number: PCT/CN2022/136530
(87) International publication number: WO 2023/116403

(57) **Abstract**

A buffer status report sending method and a communication apparatus are provided. The buffer status report sending method includes: receiving a first configuration message from an access network device, where the first configuration message is used to configure a one-to-one correspondence between a plurality of buffer status BS intervals and a plurality of index values; and sending a buffer status report BSRto the access network device based on the correspondence, where the BSR includes a target index value, and the plurality of index values include the target index value. According to the BSR sending method, a terminal may send the BSR to the access network device based on the correspondence that is between the BS interval and the index value and that is configured by the access network device for the terminal, to request a transmission resource that better meets an actual requirement of the terminal, thereby reducing a waste of transmission resources.

## Description

This application claims priority to Chinese Patent Application No. 202111605541.3, filed with the China National Intellectual Property Administration on December 25, 2021 and entitled "BUFFER STATUS REPORT SENDING METHOD AND COMMUNICATION APPARATUS", which is incorporated herein by reference in its entirety.

### TECHNICAL FIELD

This application relates to the field of communication technologies, and in particular, to a buffer status report sending method and a communication apparatus.

### BACKGROUND

In an uplink transmission process, when user equipment (user equipment, UE) needs to transmit uplink data, the UE needs to request, by using an uplink scheduling request (scheduling request, SR), a base station to perform uplink resource scheduling, and report, by using a buffer status report (buffer status report, BSR), a data amount of to-be-transmitted uplink data in a logical channel group (logical channel group, LCG), so that the base station allocates sufficient uplink resources to each LCG for uplink data transmission.

A specific process in which the UE reports the data amount of the to-be-transmitted uplink data in the LCG by using the BSR may be understood as follows: The terminal quantizes the data amount of the to-be-transmitted uplink data in the LCG, to determine an index value of a buffer status (buffer state, BS) interval corresponding to the data amount of the to-be-transmitted uplink data in the LCG, and reports the index value of the BS interval corresponding to the data amount of the to-be-transmitted uplink data in the LCG. The base station allocates an uplink transmission resource to the terminal based on a largest value in a quantization interval corresponding to the index value.

Usually, a bit length of the BSR is limited, and a quantity of BS intervals that can be obtained through division is limited. For strong-interaction media services such as extended reality (extended reality, XR), an active packet discarding mechanism exists, that is, a packet whose waiting time in a user buffer exceeds a specific threshold is discarded. Therefore, a buffer of this type of service usually includes a specific amount of to-be-transmitted data, and a coverage range of a BS interval may be far greater than the amount of to-be-transmitted data. As a result, BSR reporting is inaccurate, and a quantity of resources allocated by the base station may be far greater than a quantity of resources actually required by the terminal, thereby causing a waste of transmission resources.

### SUMMARY

Embodiments of this application provide a buffer status report sending method and a communication apparatus. According to the buffer status report sending method, an access network device may configure, for a terminal, a BS interval that better meets an actual requirement of the terminal, and the terminal sends a BSR to the access network device based on a correspondence that is between a BS interval and an index value and that is configured by the access network device, to request a transmission resource that better meets the requirement of the terminal. Compared with a manner in which a terminal determines a correspondence between a BS interval and an index value based on a requirement of the terminal, and sends a BSR to an access network device, this method helps the access network device determine, based on a resource scheduling granularity of the access network device, an amount of data that can be transmitted each time in different channel states, so that the BS interval can be more effectively obtained through division, and transmission efficiency can be improved.

According to a first aspect, an embodiment of this application provides a buffer status report sending method. The method may be performed by a terminal, or may be performed by a component (for example, a processor, a chip, or a chip system) of the terminal, or may be implemented by a logical module or software that can implement all or some functions of the terminal. In the buffer status report sending method, a first configuration message is received from an access network device, where the first configuration message is used to configure a one-to-one correspondence between a plurality of buffer status BS intervals and a plurality of index values; and a BSR is sent to the access network device based on the correspondence, where the BSR includes a target index value, and the plurality of index values include the target index value.

According to the method described in the first aspect, the terminal sends the BSR to the access network device based on a correspondence that is between a BS interval and an index value and that is configured by the access network device, to request a transmission resource that better meets a requirement of the terminal, thereby avoiding a case in which a large quantity of transmission resources are wasted because a transmission resource configured by the access network device based on the BSR does not match the requirement of the terminal.

In a possible implementation, uplink data is sent to the access network device, where the uplink data is carried on a logical channel group LCG, and the LCG is associated with the correspondence. In this possible implementation, the uplink data carried on the LCG is associated with the correspondence between the BS interval and the index value. In this case, a transmission resource requested by using the BSR sent by the terminal better meets a transmission requirement of the LCG. Further, the terminal sends, to the access network device based on the transmission resource, the uplink data carried on the LCG, thereby reducing a waste of transmission resources.

In a possible implementation, the first configuration message further includes identification information of the LCG. In this possible implementation, different LCGs of the terminal may be associated with correspondences between different BS intervals and index values, so that a matching degree between an LCG transmission requirement of the terminal and a BS interval can be improved.

In a possible implementation, the plurality of BS intervals include a BS interval corresponding to a long BSR and/or a BS interval corresponding to a short BSR.

In a possible implementation, the correspondence is included in a buffer size table corresponding to the long BSR and/or a buffer size table corresponding to the short BSR.

In a possible implementation, a report message is sent to the access network device, where the report message indicates a data frame size fluctuation range, and the data frame size fluctuation range is used to determine the correspondence. In this possible implementation, the correspondence that is between the BS interval and the index value and that is determined by the access network device may change with the data frame size fluctuation range reported by the terminal, so that the correspondence between the BS interval and the index value better matches a requirement of the terminal.

In a possible implementation, the report message further includes a transmission indicator of the uplink data, and the transmission indicator is used to determine the correspondence. The transmission indicator includes but is not limited to one or more of quality of service information, a transmission rate, a frame rate, or a relative data frame size fluctuation range. In this possible implementation, the access network device may determine the correspondence between the BS interval and the index value based on the transmission indicator of the uplink data, so that the correspondence between the BS interval and the index value matches the uplink data.

According to a second aspect, an embodiment of this application provides a buffer status report receiving method. The method may be performed by an access network device, or may be performed by a component (for example, a processor, a chip, or a chip system) of the access network device, or may be implemented by a logical module or software that can implement all or some functions of the access network device. In the method, a first configuration message is sent to a terminal, where the first configuration message is used to configure a one-to-one correspondence between a plurality of buffer status BS intervals and a plurality of index values; and a buffer status report BSR is received from the terminal, where the BSR includes a target index value, and the plurality of index values include the target index value.

According to the method described in the second aspect, for beneficial effects of the method, refer to the beneficial effects described in the first aspect. Details are not described again.

In a possible implementation, uplink data is received from the terminal, where the uplink data is carried on a logical channel group LCG, and the LCG is associated with the correspondence.

In a possible implementation, the first configuration message further includes identification information of the LCG.

In a possible implementation, the plurality of BS intervals include a BS interval corresponding to a long BSR and/or a BS interval corresponding to a short BSR.

In a possible implementation, the correspondence is included in a buffer size table corresponding to the long BSR and/or a buffer size table corresponding to the short BSR.

In a possible implementation, a report message is received from the terminal, where the report message indicates a data frame size fluctuation range.

In a possible implementation, the correspondence is determined based on the data frame size fluctuation range.

In a possible implementation, the report message further includes a transmission indicator of the uplink data, and the transmission indicator includes but is not limited to one or more of quality of service information, a transmission rate, a frame rate, or a relative data frame size fluctuation range.

In a possible implementation, the correspondence is determined based on the transmission indicator of the uplink data.

According to a third aspect, an embodiment of this application provides another buffer status report sending method. The method may be performed by a terminal, or may be performed by a component (for example, a processor, a chip, or a chip system) of the terminal, or may be implemented by a logical module or software that can implement all or some functions of the terminal. In the method, a first configuration message is received from an access network device, where the first configuration message is used to configure a BS interval quantization parameter set, and the BS interval quantization parameter set indicates quantization granularities of at least two types of BS intervals; and a buffer status report BSR is sent to the access network device based on the target BS quantization parameter set, where the BSR includes an index value corresponding to a target BS interval, and the at least two types of BS intervals include the target BS interval.

According to the method described in the third aspect, the terminal sends the BSR to the access network device based on the BS interval quantization parameter set configured by the access network device, to request a transmission resource that better meets a requirement of the terminal, thereby avoiding a case in which a large quantity of transmission resources are wasted because a transmission resource configured by the access network device based on the BSR does not match the requirement of the terminal.

In a possible implementation, uplink data is sent to the access network device, where the uplink data is carried on a logical channel group LCG, and the LCG is associated with the BS interval quantization parameter set. In this possible implementation, the uplink data carried on the LCG is associated with the BS interval quantization parameter set. In this case, a transmission resource requested by using the BSR sent by the terminal better meets a transmission requirement of the LCG. Further, the terminal sends, to the access network device based on the transmission resource, the uplink data carried on the LCG, thereby reducing a waste of transmission resources.

In a possible implementation, the first configuration message further includes identification information of the LCG. In this possible implementation, different LCGs of the terminal may be associated with different BS interval quantization parameter sets, so that a matching degree between an LCG transmission requirement of the terminal and a BS interval can be improved.

In a possible implementation, the BS interval quantization parameter set includes a quantization granularity of each of the at least two types of BS intervals and a proportion of each type of BS interval in the at least two types of BS intervals.

In a possible implementation, the at least two types of BS intervals include a first-type BS interval and a second-type BS interval, and a quantization granularity of the first-type BS interval is different from a quantization granularity of the second-type BS interval. In this possible implementation, a BS interval is obtained through uneven division, thereby improving adaptability between the BS interval and a requirement of the terminal.

In a possible implementation, the BS interval quantization parameter set includes a BS interval quantization parameter set corresponding to a long BSR and/or a BS interval quantization parameter set corresponding to a short BSR.

In a possible implementation, a report message is sent to the access network device, where the report message includes data frame statistical information, and the data statistical information is used to determine the BS interval quantization parameter set. The data frame statistical information includes but is not limited to one or more of an average value of data frame sizes, a standard deviation of data frame sizes, a largest value of data frame sizes, or a smallest value of data frame sizes. In this possible implementation, the BS interval quantization parameter set determined by the access network device may change with the data frame statistical information reported by the terminal, so that the BS interval quantization parameter set better matches a requirement of the terminal.

According to a fourth aspect, an embodiment of this application provides another buffer status report receiving method. The method may be performed by an access network device, or may be performed by a component (for example, a processor, a chip, or a chip system) of the access network device, or may be implemented by a logical module or software that can implement all or some functions of the access network device. In the method, a first configuration message is sent to a terminal, where the first configuration message is used to configure a BS interval quantization parameter set, and the BS interval quantization parameter set indicates quantization granularities of at least two types of BS intervals; and a buffer status report BSR is received from the terminal, where the BSR includes an index value corresponding to a target BS interval, and the at least two types of BS intervals include the target BS interval.

According to the method described in the fourth aspect, for beneficial effects of the method, refer to the beneficial effects described in the third aspect. Details are not described again.

In a possible implementation, uplink data is received from the terminal, where the uplink data is carried on a logical channel group LCG, and the LCG is associated with the BS interval quantization parameter set.

In a possible implementation, the first configuration message further includes identification information of the LCG.

In a possible implementation, the BS interval quantization parameter set includes a quantization granularity of each of the at least two types of BS intervals and a proportion of each type of BS interval in the at least two types of BS intervals.

In a possible implementation, the at least two types of BS intervals include a first-type BS interval and a second-type BS interval, and a quantization granularity of the first-type BS interval is different from a quantization granularity of the second-type BS interval. In this possible implementation, a BS interval is obtained through uneven division, thereby improving adaptability between the BS interval and a requirement of the terminal.

In a possible implementation, the BS interval quantization parameter set includes a BS interval quantization parameter set corresponding to a long BSR and/or a BS interval quantization parameter set corresponding to a short BSR.

In a possible implementation, a report message is received from the terminal, where the report message includes data frame statistical information, and the data statistical information includes but is not limited to one or more of an average value of data frame sizes, a standard deviation of data frame sizes, a largest value of data frame sizes, or a smallest value of data frame sizes.

In a possible implementation, the BS interval quantization parameter set is determined based on the data frame statistical information.

According to a fifth aspect, this application provides a communication apparatus. The apparatus may be a terminal, or may be a chip, a chip system, a processor, or the like that supports the terminal in implementing the foregoing method, or may be a logical module or software that can implement all or some functions of the terminal. The communication apparatus may alternatively be a chip system. The communication apparatus may perform the method according to the first aspect or the third aspect. A function of the communication apparatus may be implemented by hardware, or may be implemented by hardware executing corresponding software. The hardware or the software includes one or more units corresponding to the foregoing function. The unit may be software and/or hardware. For operations performed by the communication apparatus and beneficial effects thereof, refer to the method in the first aspect or the third aspect and the beneficial effects thereof. Repeated parts are not described again.

According to a sixth aspect, this application provides a communication apparatus. The apparatus may be an access network device, or may be a chip, a chip system, a processor, or the like that supports the access network device in implementing the foregoing method, or may be a logical module or software that can implement all or some functions of the access network device. The communication apparatus may alternatively be a chip system. The communication apparatus may perform the method according to the second aspect or the fourth aspect. A function of the communication apparatus may be implemented by hardware, or may be implemented by hardware executing corresponding software. The hardware or the software includes one or more units corresponding to the foregoing function. The unit may be software and/or hardware. For operations performed by the communication apparatus and beneficial effects thereof, refer to the method in the second aspect or the fourth aspect and the beneficial effects thereof. Repeated parts are not described again.

According to a seventh aspect, this application provides a communication apparatus. The communication apparatus may be a terminal, or may be a chip, a chip system, a processor, or the like that supports the terminal in implementing the foregoing method, or may be a logical module or software that can implement all or some functions of the terminal. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal in the foregoing method embodiments.

According to an eighth aspect, this application provides a communication apparatus. The communication apparatus may be an access network device, or may be a chip, a chip system, a processor, or the like that supports the access network device in implementing the foregoing method, or may be a logical module or software that can implement all or some functions of the access network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the access network device in the foregoing method embodiments.

According to a ninth aspect, this application provides a computer-readable storage medium. The computer-readable storage medium is configured to store computer executable instructions. When the computer executable instructions are executed, the method performed by the terminal in the method according to the first aspect or the third aspect is implemented, or the method performed by the access network device in the method according to the second aspect or the fourth aspect is implemented.

According to a tenth aspect, this application provides a computer program product including a computer program. When the computer program is executed, the method performed by the terminal in the method according to the first aspect or the third aspect is implemented, or the method performed by the access network device in the method according to the second aspect or the fourth aspect is implemented.

According to an eleventh aspect, this application provides a communication system. The communication system includes the communication apparatuses according to the fifth aspect and the sixth aspect, or includes the communication apparatuses according to the seventh aspect and the eighth aspect.

### BRIEF DESCRIPTION OF DRAWINGS

FIG. 1 is a diagram of a system architecture according to this application;
FIG. 2a is a diagram of a structure of a protocol layer between an access network device and a terminal according to this application;
FIG. 2b is a diagram of a mapping relationship between protocol layers according to this application;
FIG. 2c is a diagram of a user plane data flow mapping relationship according to this application;
FIG. 3a is a diagram of a BSR in a short BSR format according to this application;
FIG. 3b is a diagram of a BSR in a long BSR format according to this application;
FIG. 4 is a schematic flowchart of a BSR method according to this application;
FIG. 5 is a schematic flowchart of another BSR method according to this application;
FIG. 6 is a diagram of a BS interval obtained based on a BS interval quantization parameter set according to this application;
FIG. 7 is a diagram of a structure of a communication apparatus according to this application; and
FIG. 8 is a diagram of a structure of another communication apparatus according to this application.

### DESCRIPTION OF EMBODIMENTS

The following further describes specific embodiments of this application in detail with reference to accompanying drawings.

The terms "first", "second", and the like in this specification, claims, and accompanying drawings of this application are used to distinguish between different objects, but are not used to describe a specific order. In addition, the terms "including", "having", or any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to embodiments may be included in at least one embodiment of this application. The phrase appear at various locations in this specification may neither necessarily mean a same embodiment, nor mean an independent or optional embodiment exclusive from another embodiment. It is explicitly and implicitly understood by persons skilled in the art that embodiments described in this specification may be combined with another embodiment.

In this application, "at least one (item)" means one or more, "a plurality of" means two or more, "at least two (items)" means two or three or more. The term "and/or" is used to describe an association relationship between associated objects and indicates that three relationships may exist. For example, "A and/or B" may indicate the following three cases: Only A exists, only B exists, and both A and B exist, where A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

To better understand embodiments of this application, the following first describes a system architecture in embodiments of this application.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), and a future communication system.

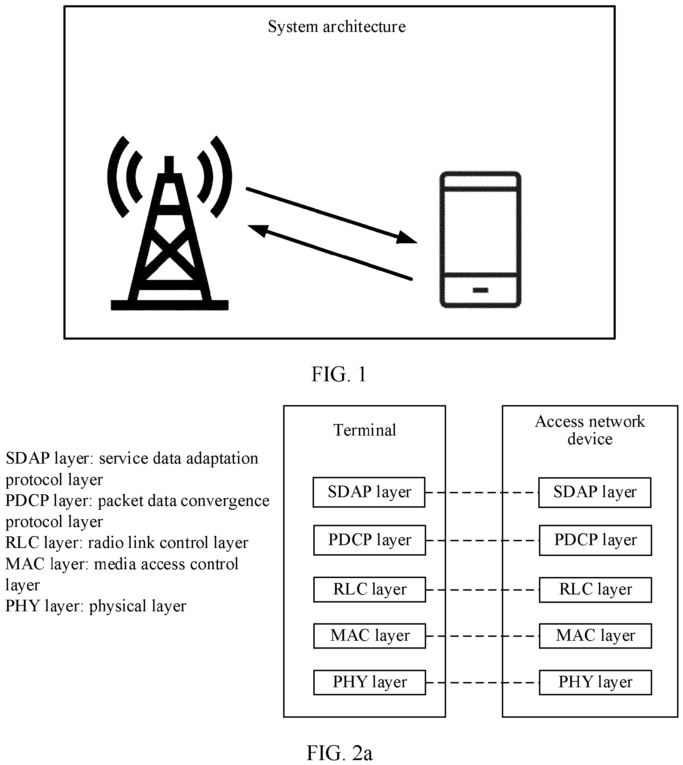

FIG. 1 is a diagram of a system architecture according to an embodiment of this application. The system architecture shown in FIG. 1 includes a terminal and an access network device. The following separately describes in detail the terminal and the access network device in the system architecture in FIG. 1.

### 1. Terminal

The terminal includes a device that provides voice and/or data connectivity for a user. For example, the terminal is a device that has a wireless transceiver function, and may be deployed on land, including indoor or outdoor, handheld, wearable, or vehicle-mounted; or may be deployed on a water surface (for example, on a ship); or may be deployed in air (for example, on an airplane, a balloon, or a satellite). The terminal may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a vehicle-mounted terminal, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal or a wearable terminal in smart home (smart home), or the like. An application scenario is not limited in embodiments of this application. The terminal may also be sometimes referred to as a terminal device, UE, an access terminal, a vehicle-mounted terminal, an industrial control terminal, a UE unit, a UE station, a mobile station, a mobile console, a remote station, a remote terminal, a mobile device, a UE terminal, a wireless communication device, a UE agent, a UE apparatus, or the like. The terminal may be fixed or movable. It may be understood that all or some functions of the terminal in this application may also be implemented by using a software function running on hardware, or may be implemented by using a virtualization function instantiated on a platform (for example, a cloud platform).

### 2. Access network device

A (radio) access network ((radio) access network, (R)AN) is configured to enable a terminal device to access a wireless network. It should be understood that, for ease of description, the (R)AN is described as a RAN below. The RAN may include one or more RAN devices (or access network devices). In other words, the access network device may be understood as a node or a device that enables the terminal to access the wireless network.

An interface between the access network device and the terminal may be a Uu interface (or referred to as an air interface). Certainly, in future communication, names of these interfaces may remain unchanged, or may be replaced with other names. This is not limited in this application. The access network device may be any device having a wireless transceiver function, including but not limited to an evolved NodeB (NodeB, eNB, or e-NodeB, evolved NodeB) in LTE, a base station (gNodeB or gNB) or a transmission reception point (transmission reception point, TRP) in NR, a subsequently evolved base station in the 3rd generation partnership project (3rd generation partner project, 3GPP), an access node in a Wi-Fi system, a wireless relay node, a wireless backhaul node, and the like. The base station may be a macro base station, a micro base station, a pico base station, a small cell, a relay station, a balloon station, or the like. A plurality of base stations may support networks using a same technology mentioned above, or may support networks using different technologies mentioned above. The base station may include one or more co-site or non-co-site TRPs. The access network device may alternatively be a radio controller, a central unit (central unit, CU), and/or a distributed unit (distributed unit, DU) in a cloud radio access network (cloud radio access network, CRAN) scenario. The access network device may alternatively be a server, a wearable device, a vehicle-mounted device, or the like. The following uses an example in which the access network device is a base station for description. The plurality of access network devices may be base stations of a same type, or may be base stations of different types. The base station may communicate with a terminal, or may communicate with the terminal through a relay station. The terminal may communicate with a plurality of base stations using different technologies. For example, the terminal may communicate with a base station supporting an LTE network, or may communicate with a base station supporting a 5G network, or may support dual connections to a base station in an LTE network and a base station in a 5G network. It may be understood that all or some functions of the access network device in this application may also be implemented by using a software function running on hardware, or may be implemented by using a virtualization function instantiated on a platform (for example, a cloud platform).

It should be learned that communication between the access network device and the terminal complies with a specific protocol layer structure. For example, refer to FIG. 2a. A user plane protocol layer structure that is complied with between the access network device and the terminal may include a radio resource control (radio resource control, RRC) layer, a packet data convergence protocol (packet data convergence protocol, PDCP) layer, a radio link control (radio link control, RLC) layer, a media access control (media access control, MAC) layer, a physical layer (physical layer, PHY layer), and a service data adaptation protocol (service data adaptation protocol, SDAP) layer. A control plane protocol layer structure that is complied with between the access network device and the terminal may include a PDCP layer, an RLC layer, a MAC layer, and a physical layer.

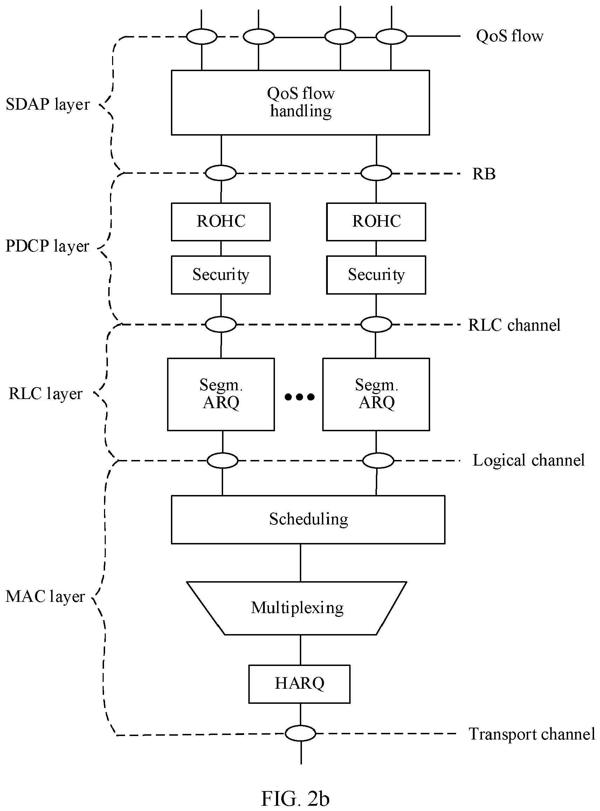

FIG. 2b is a diagram of a mapping relationship between protocol layers according to this application. It can be learned from FIG. 2b that a PHY layer provides a transport channel (transport channel) for a MAC layer, the MAC layer provides a logical channel (logical channel, LC) for an RLC layer, the RLC layer provides an RLC channel (RLC channel) for a PDCP layer, the PDCP layer provides a radio bearer (radio bearer, RB) for an SDAP layer, and the SDAP layer is responsible for mapping between an uplink (uplink, UL)/(downlink, DL) quality of service flow (quality of service flow, QoS Flow) and an RB.

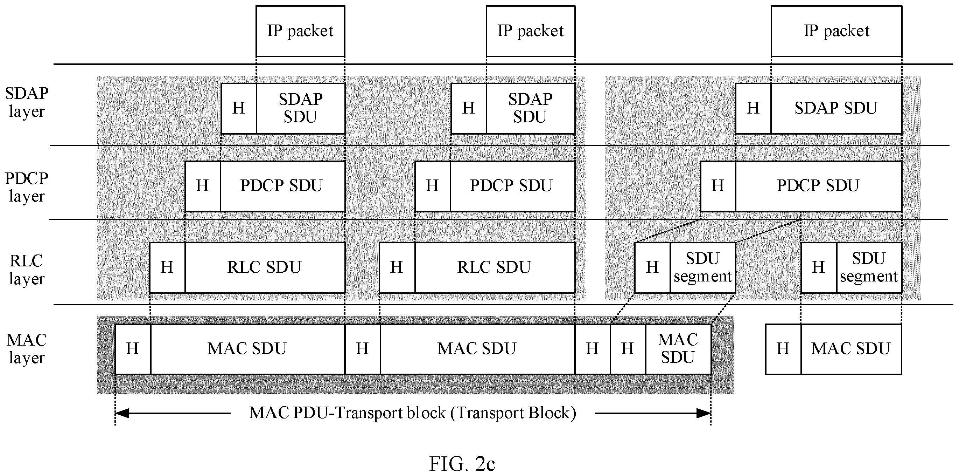

For example, FIG. 2c is a diagram of a user plane data flow mapping relationship according to this application. In FIG. 2c, service data is divided into a plurality of internet protocol (internet protocol, IP) packets at a network transport layer, and each UL/DL IP packet is marked with a QoS flow identifier (QoS Flow ID, QFI) corresponding to the IP packet. The SDAP layer obtains a plurality of UL/DL QoS flows based on the QFI of each IP packet. Further, the SDAP layer maps the plurality of UL/DL QoS flows to at least one RB, where one RB may be mapped to one or more QoS flows, and one QoS flow can be mapped to only one RB each time. The PDCP layer is responsible for mapping data packets on RBs to RLC channels. Each RLC channel corresponds to one RB. The RLC layer is responsible for mapping RLC channels to logical channels. Each logical channel corresponds to one RLC channel and one RB. The MAC layer is responsible for scheduling and multiplexing logical channels, schedules the logical channels based on priorities, may multiplex a plurality of logical channels onto a same transport channel, and delivers the multiplexed logical channels to the PHY layer for transmission.

To facilitate understanding of the technical solutions of this solution, the following explains and describes some terms in this application.

### 1. Extended reality (extended reality, XR)

XR refers to combining reality and virtuality through a computer to build a human-computer interaction virtual environment. XR includes VR and AR. Usually, an XR service has a transmission requirement of a low packet loss rate and a low delay.

### 2. Active timeout packet discarding mechanism

Because an XR service has a low-delay transmission requirement, a video frame of the XR service needs to be transmitted from a server to a terminal (or transmitted from the terminal to the server) within a specific time period (that is, a delay budget). For example, uplink data is transmitted from the terminal to the server. If congestion occurs in an air interface transmission process, when a waiting time of the video frame of the XR service in a buffer (buffer) of the terminal exceeds the delay budget, the terminal discards a timeout XR data packet, to save transmission resources and ensure successful transmission of a subsequent video frame.

### 3. Buffer status report

If a terminal has no to-be-uploaded uplink data, but an access network device allocates, to the terminal, an uplink transmission resource for transmitting the uplink data, a waste of transmission resources is caused. To avoid such a waste of transmission resources, an SR mechanism is provided in a long term evolution (long term evolution, LTE) technology and a new radio (new radio, NR) technology. In the SR mechanism, the terminal sends an SR to a base station, where the SR notifies the terminal that an uplink transmission resource is required to transmit uplink data; and the terminal reports a BSR to the base station, where the BSR indicates a data amount of to-be-transmitted uplink data of the terminal. Further, the base station configures, for the terminal based on the BSR, the uplink transmission resource for transmitting the uplink data.

In LTE and NR systems, a terminal usually sends a BSR to an access network device at a reporting granularity of to-be-transmitted data corresponding to an LCG. Classification into LCGs usually depends on algorithm implementation of the access network device. For example, the access network device may classify logical channels having a same QoS requirement into a same LCG, or classify logical channels having a same priority (priority) into a same LCG. Because configurations of the LCG and the logical channel of the terminal are controlled by the base station, the base station knows specific logical channels included in each LCG and priorities of these logical channels. Although the base station cannot know a buffer status of a separate logical channel, because logical channels in a same LCG have similar QoS/priority requirements, reporting a buffer status based on the LCG may also enable uplink scheduling to provide an appropriate scheduling result. The following uses an NR system as an example to describe a method in which a terminal reports a BSR to an access network device.

In the NR system, a BSR is reported via a BSR MAC control element (control element, CE) at a MAC layer. The reported BSR includes two formats: a short BSR (also referred to as a short BSR) format and a long BSR (also referred to as a long BSR) format.

### 3.1. Short BSR

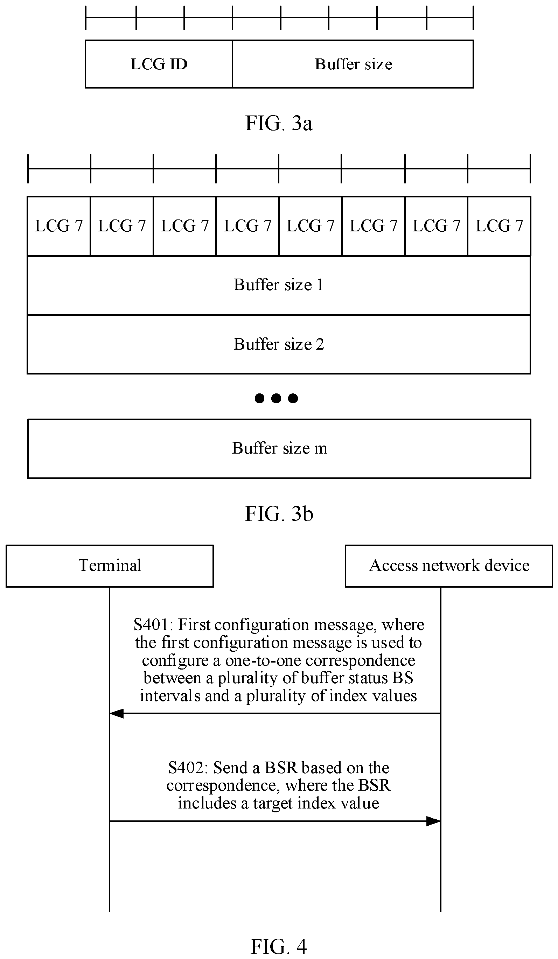

The short BSR may also be referred to as a truncated BSR (Truncated BSR). An amount of to-be-transmitted data in only one LCG is reported in the short BSR. For a diagram of a BSR in the short BSR format, refer to FIG. 3a. In FIG. 3a, the BSR in the short BSR format includes one LCG ID field and one buffer size (buffer size) field. In the short BSR format, 5 bits (bit) indicate a BS value (that is, 5 bits are used to report an index value (index) of a BS interval, and the short BSR format has 32 BS intervals). Table 1 shows a correspondence between a buffer size field of a short BSR and a BS value (value).

**Table 1**

| Index | BS value | Index | BS value | Index | BS value | Index | BS value |
|---|---|---|---|---|---|---|---|
| 0 | 0 | 8 | ≤102 | 16 | ≤1446 | 24 | ≤20516 |
| 1 | ≤10 | 9 | ≤142 | 17 | ≤2014 | 25 | ≤28581 |
| 2 | ≤14 | 10 | ≤198 | 18 | ≤2806 | 26 | ≤39818 |
| 3 | ≤20 | 11 | ≤276 | 19 | ≤3909 | 27 | ≤55474 |
| 4 | ≤28 | 12 | ≤384 | 20 | ≤5446 | 28 | ≤77284 |
| 5 | ≤38 | 13 | ≤535 | 21 | ≤7587 | 29 | ≤107669 |
| 6 | ≤53 | 14 | ≤745 | 22 | ≤10570 | 30 | ≤150000 |
| 7 | ≤74 | 15 | ≤1038 | 23 | ≤14726 | 31 | >150000 |

For example, based on the correspondence between the buffer size field and the BS value in Table 1, when a buffer quantity of the LCG is less than or equal to 10 bytes, an index value of the buffer size field in FIG. 3a is 1; or when a buffer quantity of the LCG is greater than 276 bytes and less than or equal to 384 bytes, an index value of the buffer size field is 12.

### 3.2. Long BSR

For a diagram of a BSR in the long BSR format, refer to FIG. 3b. In FIG. 3b, the BSR in the long BSR format includes eight LCG ID fields (namely, an LCG 0 to an LCG 7 in FIG. 3b) and m buffer size fields (namely, buffer sizes in FIG. 3b). If LCGi is any one of the eight LCG ID fields, when LCGi is 1, it indicates that a BS of an ith LCG is reported; otherwise (when LCGi is not 1), it indicates that a BS of an ith LCG is not reported. Therefore, in the long BSR format, buffer sizes of the eight LCGs may be reported to the base station together. In the long BSR format, 8 bits (bit) indicate a BS value (that is, 8 bits are used to report an index value (index) of a BS interval, and the long BSR format has 256 BS intervals). Table 2 shows a correspondence between a buffer size field of a long BSR and a BS value.

**Table 2**

| Index | BS value | Index | BS value | Index | BS value | Index | BS value |
|---|---|---|---|---|---|---|---|
| 0 | 0 | 64 | ≤560 | 128 | ≤31342 | 192 | ≤1754595 |
| 1 | ≤10 | 65 | ≤597 | 129 | ≤33376 | 193 | ≤1868488 |
| 2 | ≤11 | 66 | ≤635 | 130 | ≤35543 | 194 | ≤1989774 |
| 3 | ≤12 | 67 | ≤677 | 131 | ≤37850 | 195 | ≤2118933 |
| 4 | ≤13 | 68 | ≤720 | 132 | ≤40307 | 196 | ≤2256475 |
| 5 | ≤14 | 69 | ≤767 | 133 | ≤42923 | 197 | ≤2402946 |
| 6 | ≤15 | 70 | ≤817 | 134 | ≤45709 | 198 | ≤2558924 |
| 7 | ≤16 | 71 | ≤870 | 135 | ≤48676 | 199 | ≤2725027 |
| 8 | ≤17 | 72 | ≤926 | 136 | ≤51836 | 200 | ≤2901912 |
| 9 | ≤18 | 73 | ≤987 | 137 | ≤55200 | 201 | ≤3090279 |
| 10 | ≤19 | 74 | ≤1051 | 138 | ≤58784 | 202 | ≤3290873 |
| 11 | ≤20 | 75 | ≤1119 | 139 | ≤62599 | 203 | ≤3504487 |
| 12 | ≤22 | 76 | ≤1191 | 140 | ≤66663 | 204 | ≤3731968 |
| 13 | ≤23 | 77 | ≤1269 | 141 | ≤70990 | 205 | ≤3974215 |
| 14 | ≤25 | 78 | ≤1351 | 142 | ≤75598 | 206 | ≤4232186 |
| 15 | ≤26 | 79 | ≤1439 | 143 | ≤80505 | 207 | ≤4506902 |
| 16 | ≤28 | 80 | ≤1532 | 144 | ≤85730 | 208 | ≤4799451 |
| 17 | ≤30 | 81 | ≤1631 | 145 | ≤91295 | 209 | ≤5110989 |
| 18 | ≤32 | 82 | ≤1737 | 146 | ≤97221 | 210 | ≤5442750 |
| 19 | ≤34 | 83 | ≤1850 | 147 | ≤103532 | 211 | ≤5796046 |
| 20 | ≤36 | 84 | ≤1970 | 148 | ≤110252 | 212 | ≤6172275 |
| 21 | ≤38 | 85 | ≤2098 | 149 | ≤117409 | 213 | ≤6572925 |
| 22 | ≤40 | 86 | ≤2234 | 150 | ≤125030 | 214 | ≤6999582 |
| 23 | ≤43 | 87 | ≤2379 | 151 | ≤133146 | 215 | ≤7453933 |
| 24 | ≤46 | 88 | ≤2533 | 152 | ≤141789 | 216 | ≤7937777 |
| 25 | ≤49 | 89 | ≤2698 | 153 | ≤150992 | 217 | ≤8453028 |
| 26 | ≤52 | 90 | ≤2873 | 154 | ≤160793 | 218 | ≤9001725 |
| 27 | ≤55 | 91 | ≤3059 | 155 | ≤171231 | 219 | ≤9586039 |
| 28 | ≤59 | 92 | ≤3258 | 156 | ≤182345 | 220 | ≤10208280 |
| 29 | ≤62 | 93 | ≤3469 | 157 | ≤194182 | 221 | ≤10870913 |
| 30 | ≤66 | 94 | ≤3694 | 158 | ≤206786 | 222 | ≤11576557 |
| 31 | ≤71 | 95 | ≤3934 | 159 | ≤220209 | 223 | ≤12328006 |
| 32 | ≤75 | 96 | ≤4189 | 160 | ≤234503 | 224 | ≤13128233 |
| 33 | ≤80 | 97 | ≤4461 | 161 | ≤249725 | 225 | ≤13980403 |
| 34 | ≤85 | 98 | ≤4751 | 162 | ≤265935 | 226 | ≤14887889 |
| 35 | ≤91 | 99 | ≤5059 | 163 | ≤283197 | 227 | ≤15854280 |
| 36 | ≤97 | 100 | ≤5387 | 164 | ≤301579 | 228 | ≤16883401 |
| 37 | ≤103 | 101 | ≤5737 | 165 | ≤321155 | 229 | ≤17979324 |
| 38 | ≤110 | 102 | ≤6109 | 166 | ≤342002 | 230 | ≤19146385 |
| 39 | ≤117 | 103 | ≤6506 | 167 | ≤364202 | 231 | ≤20389201 |
| 40 | ≤124 | 104 | ≤6928 | 168 | ≤387842 | 232 | ≤21712690 |
| 41 | ≤132 | 105 | ≤7378 | 169 | ≤413018 | 233 | ≤23122088 |
| 42 | ≤141 | 106 | ≤7857 | 170 | ≤439827 | 234 | ≤24622972 |
| 43 | ≤150 | 107 | ≤8367 | 171 | ≤468377 | 235 | ≤26221280 |
| 44 | ≤160 | 108 | ≤8910 | 172 | ≤498780 | 236 | ≤27923336 |
| 45 | ≤170 | 109 | ≤9488 | 173 | ≤531156 | 237 | ≤29735875 |
| 46 | ≤181 | 110 | ≤10104 | 174 | ≤565634 | 238 | ≤31666069 |
| 47 | ≤193 | 111 | ≤10760 | 175 | ≤602350 | 239 | ≤33721553 |
| 48 | ≤205 | 112 | ≤11458 | 176 | ≤641449 | 240 | ≤35910462 |
| 49 | ≤218 | 113 | ≤12202 | 177 | ≤683087 | 241 | ≤38241455 |
| 50 | ≤233 | 114 | ≤12994 | 178 | ≤727427 | 242 | ≤40723756 |
| 51 | ≤248 | 115 | ≤13838 | 179 | ≤774645 | 243 | ≤43367187 |
| 52 | ≤264 | 116 | ≤14736 | 180 | ≤824928 | 244 | ≤46182206 |
| 53 | ≤281 | 117 | ≤15692 | 181 | ≤878475 | 245 | ≤49179951 |
| 54 | ≤299 | 118 | ≤16711 | 182 | ≤935498 | 246 | ≤52372284 |
| 55 | ≤318 | 119 | ≤17795 | 183 | ≤996222 | 247 | ≤55771835 |
| 56 | ≤339 | 120 | ≤18951 | 184 | ≤1060888 | 248 | ≤59392055 |
| 57 | ≤361 | 121 | ≤20181 | 185 | ≤1129752 | 249 | ≤63247269 |
| 58 | ≤384 | 122 | ≤21491 | 186 | ≤1203085 | 250 | ≤67352729 |
| 59 | ≤409 | 123 | ≤22885 | 187 | ≤1281179 | 251 | ≤71724679 |
| 60 | ≤436 | 124 | ≤24371 | 188 | ≤1364342 | 252 | ≤76380419 |
| 61 | ≤464 | 125 | ≤25953 | 189 | ≤1452903 | 253 | ≤81338368 |
| 62 | ≤494 | 126 | ≤27638 | 190 | ≤1547213 | 254 | >81338368 |
| 63 | ≤526 | 127 | ≤29431 | 191 | ≤1647644 | 255 | Reserved |

When any one of the following events occurs, the terminal side triggers reporting of the BSR to the access network device in the long BSR format:
Event 1: An uplink data buffer of the terminal is empty and new data arrives. When none of logical channels in all LCGs have uplink data that can be sent, if any logical channel that belongs to any LCG has data that can be sent, the terminal triggers reporting of the BSR. For example, the terminal sends uplink data for the first time. The BSR is referred to as a regular BSR (also referred to as a regular BSR).
Event 2: High-priority data arrives: If the terminal has sent a BSR and is waiting for an uplink grant (uplink grant), and data with a higher priority (that is, a priority of a logical channel to which the data belongs is higher than a priority of a logical channel in any LCG) needs to be transmitted, the terminal triggers reporting of the BSR. The BSR is referred to as a "regular BSR".
Event 3: The terminal periodically updates a buffer status of the terminal to the base station: The base station configures a periodic BSR timer (also referred to as periodicBSR-timer) for the terminal. If periodicBSR-timer expires, the terminal triggers reporting of the BSR. For example, when the terminal needs to upload a large file, a time at which data arrives at a transmission buffer of the terminal is asynchronous with a time at which the terminal receives an uplink grant. That is, when sending the BSR and receiving the uplink grant, the terminal continuously fills data in an uplink transmission buffer. Therefore, the terminal needs to continuously update an amount of uplink data that needs to be transmitted. The BSR is referred to as a periodic BSR (also referred to as a periodic BSR).
Event 4: To improve robustness of the BSR, both LTE and NR provide a mechanism for retransmitting the BSR: This is to avoid a case in which the terminal sends the BSR but does not receive an uplink grant. The base station configures a retransmission BSR timer (also referred to as retxBSR-timer) for the terminal. The BSR is triggered when retxBSR-timer expires and any logical channel in any LCG of the terminal has data that can be sent. The BSR is referred to as a "regular BSR". When receiving an uplink grant for newly transmitted data, the terminal restarts retxB SR-timer.
Event 5: Waste reuse: When the terminal has an uplink resource and finds that data that needs to be sent is insufficient to fill the resource, redundant bits are used as padding bits and are filled with some irrelevant values. Using the redundant bits to transmit useful data such as the BSR is better than using the redundant bits as the padding bits. Therefore, when a quantity of padding bits is greater than or equal to a size of "BSR MAC CE + corresponding subheader", the terminal uses these bits to send the BSR. The BSR is referred to as a padding BSR (also referred to as a padding BSR).

For a regular BSR and a periodic BSR, a long BSR is reported if more than one LCG in a slot (slot) has data that needs to be sent; or a short BSR is reported if more than one LCG in a slot (slot) has no data that needs to be sent. For a padding BSR, when a quantity of padding bits is greater than or equal to a size of "short BSR + corresponding subheader" but is less than a size of "long BSR + corresponding subheader", if more than one LCG in a slot has data that needs to be sent, a BSR of an LCG in which a logical channel that has a highest priority and that has data that needs to be sent is located is reported to the base station, where the BSR is in a format of a truncated BSR. A short BSR is sent if only one LCG in the slot has data that needs to be sent. For the padding BSR, a long BSR is sent when the quantity of padding bits is greater than or equal to the size of "long BSR + corresponding subheader". Even if a plurality of events trigger the BSR, one MAC protocol data unit (protocol data unit, PDU) can include only one MAC BSR CE at most. Priorities of the regular BSR and the periodic BSR are higher than a priority of the padding BSR. To be specific, the regular/periodic BSR is preferentially transmitted.

### 4. The access network device transmits a resource for the terminal based on the BSR

When the LCG has to-be-transmitted uplink data, the terminal determines, based on Table 1 (or Table 2), an index value of a BS interval corresponding to a data amount of the to-be-transmitted uplink data in the LCG; and the terminal reports, to the access network device, the index value of the BS interval corresponding to the data amount of the to-be-transmitted uplink data in the LCG. Further, the access network device determines, in Table 1 (or Table 2) based on the index value, a BS interval corresponding to the LCG, and allocates an uplink transmission resource to the terminal based on a largest value in the BS interval. For example, the BSR table in Table 1 includes a BS interval, a value range of the BS interval is "greater than 38 bytes (Bytes) and less than or equal to 53 bytes", and an index value of the BS interval is 6. Assuming that a data amount of to-be-transmitted uplink data in an LCG 1 is 40 bytes, the terminal determines, based on Table 1, that an index value of a BS interval corresponding to the data amount (that is, 40 Bytes) of the to-be-transmitted uplink data in the LCG is 6. The terminal sends a BSR to the access network device, where the BSR indicates that the index value of the BS interval corresponding to the data amount of the to-be-transmitted uplink data in the LCG 1 is 6. The base station determines that a value range of the BS interval corresponding to the index value 6 is "greater than 38 bytes and less than or equal to 53 bytes", and allocates an uplink transmission resource to the terminal based on a largest value 53 bytes in the BS interval, that is, allocates a transmission resource that can be used to transmit 53 bytes.

It can be learned that when the uplink transmission resource is requested by using such a BSR sending method, if a coverage range of the BS interval is far greater than a data amount of to-be-transmitted data in an LCG, a quantity of resources allocated by the access network device may be far greater than a quantity of resources actually required by the terminal, thereby causing a waste of transmission resources.

In this application, the access network device configures, for the terminal, a BS interval that better meets an actual requirement of the terminal, so that a transmission resource requested by using the BSR sent by the terminal can better meet the requirement of the terminal, thereby reducing a waste of transmission resources.

The following further describes, with reference to the accompanying drawings, a BSR sending method and a communication apparatus provided in this application.

FIG. 4 is a schematic flowchart of a BSR sending method according to an embodiment of this application. FIG. 4 shows the method by using an example in which an access network device and a terminal are used as execution bodies that interact with each other. However, the execution bodies that interact with each other are not limited in this application. For example, the access network device in FIG. 4 may be a chip, a chip system, or a processor that supports the access network device in implementing the method, or may be a logical module or software that can implement all or some functions of the access network device. The terminal in FIG. 4 may be a chip, a chip system, or a processor that supports the terminal in implementing the method, or may be a logical module or software that can implement all or some functions of the terminal.

S401: The terminal receives a first configuration message from the access network device, where the first configuration message is used to configure a one-to-one correspondence between a plurality of buffer status BS intervals and a plurality of index values.

It should be understood that the one-to-one correspondence between the plurality of BS intervals and the plurality of index values means that a quantity of BS intervals is the same as a quantity of index values, and one index value corresponds to one BS interval (or understood as that there is a one-to-one correspondence between an index value and a BS interval).

The terminal receives the first configuration message sent by the access network device, where the first configuration message is used to configure a plurality of BS intervals, a plurality of index values, and a correspondence between each index value and a BS interval. The first configuration message may be a radio resource control (radio resource control, RRC) message.

In a possible implementation, the plurality of BS intervals include a BS interval corresponding to a long BSR and/or a BS interval corresponding to a short BSR. It should be understood that the BS interval corresponding to the long BSR is a BS interval in a buffer size (buffer size) table corresponding to a long BSR format, and the BS interval corresponding to the short BSR is a BS interval in a buffer size (buffer size) table corresponding to a short BSR format. In other words, the plurality of BS intervals configured by using the first configuration message may be any one of the following three cases.

Case 1: All of the plurality of BS intervals configured by using the first configuration message are BS intervals in a buffer size (buffer size) table corresponding to the long BSR format.

In this case, it may be considered that the first configuration message is used to configure only the one-to-one correspondence between the plurality of BS intervals and the plurality of index values when a BSR in the long BSR format is sent. The correspondence that is between the BS interval and the index value and based on which a BSR in the short BSR format is sent remains unchanged (that is, a default correspondence between a BS interval and an index value in the short BSR format is still used).

Case 2: All of the plurality of BS intervals configured by using the first configuration message are BS intervals in a buffer size (buffer size) table corresponding to the short BSR format.

In this case, it may be considered that the first configuration message is used to configure only the one-to-one correspondence between the plurality of BS intervals and the plurality of index values when a BSR in the short BSR format is sent. The correspondence that is between the BS interval and the index value and based on which a BSR in the long BSR format is sent remains unchanged (that is, a default correspondence between a BS interval and an index value in the long BSR format is still used).

Case 3: The plurality of BS intervals configured by using the first configuration message include the BS interval in the buffer size (buffer size) table corresponding to the long BSR format, and also include the BS interval in the buffer size (buffer size) table corresponding to the short BSR format.

In this case, it may be considered that the first configuration message is used to configure not only a one-to-one correspondence between a plurality of BS intervals and a plurality of index values when a BSR in the long BSR format is sent, but also a one-to-one correspondence between a plurality of BS intervals and a plurality of index values when a BSR in the short BSR format is sent.

In another possible implementation, the foregoing correspondence (that is, the one-to-one correspondence between the plurality of BS intervals and the plurality of index values that is configured by using the first configuration message) is included in a buffer size table corresponding to the long BSR and/or a buffer size table corresponding to the short BSR.

In other words, the one-to-one correspondence between the plurality of BS intervals and the plurality of index values is included in the buffer size table corresponding to the long BSR, that is, the first configuration message is used to configure the buffer size table corresponding to the long BSR. For example, the first configuration message may carry an identifier corresponding to the buffer size table corresponding to the long B SR.

Alternatively, the one-to-one correspondence between the plurality of BS intervals and the plurality of index values is included in the buffer size table corresponding to the short BSR, that is, the first configuration message is used to configure the buffer size table corresponding to the short BSR. For example, the first configuration message may carry an identifier corresponding to the buffer size table corresponding to the short BSR.

Alternatively, the one-to-one correspondence between the plurality of BS intervals and the plurality of index values is included in the buffer size table corresponding to the long BSR and the buffer size table corresponding to the short BSR, that is, the first configuration message is used to configure a buffer size table group. The first configuration message may carry an identifier of the buffer size table group. The buffer size table group includes the buffer size table corresponding to the long BSR and the buffer size table corresponding to the short BSR.

In a scenario, because to-be-uploaded uplink data in a buffer has a transmission indicator related to service data, the one-to-one correspondence between the plurality of BS intervals and the plurality of index values in the first configuration message is determined based on transmission indicators (for example, quality of service (quality of service, QoS) information) related to different service data, so that adaptation between a transmission resource requested by the terminal by using the BSR and a resource actually required by the terminal can be further improved, the transmission indicator includes but is not limited to one or more of a transmission rate, a frame rate, a relative data frame size fluctuation range, and an absolute data frame size fluctuation range. It should be understood that the absolute data frame size fluctuation range may be calculated based on relative frame size fluctuation and other transmission indicators (such as the transmission rate and the frame rate). For example, for XR service data, a rate is 80 Mbps, a frame rate is 60 FPS, and a relative data frame size fluctuation range is greater than 80% of an average value of data frame sizes and less than 120% of the average value of the data frame sizes. In this case, it can be learned, through calculation based on the rate and the frame rate of the XR service data, that the average value of the data frame sizes of the XR service data is 166666.7 bytes, a largest value of the data frame sizes of the XR service data is 200000 bytes, and a smallest value of the data frame sizes of the XR service data is approximately 133333 bytes, that is, an absolute data frame size fluctuation range is "greater than 133333 bytes and less than 200000 bytes". It should be noted that, in this application, unless otherwise specified, a frame size fluctuation range mentioned in this application is an absolute frame size fluctuation range.

In a possible implementation in this scenario, before the terminal receives the first configuration message from the access network device, the terminal sends a report message to the access network device, where the report message indicates a data frame size fluctuation range, and the data frame size fluctuation range is used to determine the correspondence. The report message is a type of RRC message. For example, the report message may be user assistance information (user assistance information, UAI) signaling.

For example, two buffer size table groups are predefined in a communication protocol between the terminal and the access network device: a buffer size table group 1 and a buffer size table group 2. The buffer size table group 1 includes a buffer size table 1-1 corresponding to the long BSR and a buffer size table 1-2 corresponding to the short BSR. The buffer size table group 2 includes a buffer size table 2-1 corresponding to the long BSR and a buffer size table 2-2 corresponding to the short BSR. The buffer size table 1-1 includes 255 BS intervals (a total value range of the 255 BS intervals is "greater than or equal to 0 bytes and less than or equal to 100000 bytes") and one reserved BS interval (a range of the reserved BS interval is "greater than 100000 bytes"). The buffer size table 1-2 includes 31 BS intervals (a total value range of the 31 BS intervals is "greater than or equal to 0 bytes and less than or equal to 100000 bytes") and one reserved BS interval (a range of the reserved BS interval is "greater than 100000 bytes"). The buffer size table 2-1 includes 255 BS intervals (a total value range of the 255 BS intervals is "greater than or equal to 0 bytes and less than or equal to 200000 bytes") and one reserved BS interval (a range of the reserved BS interval is greater than "200000 bytes"). The buffer size table 2-2 includes 31 BS intervals (a total value range of the 31 BS intervals is "greater than or equal to 0 bytes and less than or equal to 200000 bytes") and one reserved BS interval (a range of the reserved BS interval is "greater than 200000 bytes"). In this case, the terminal sends the UAI signaling to the access network device, where the UAI signaling indicates that a data frame size fluctuation range of to-be-transmitted uplink data (for example, the XR service data) in a buffer of the terminal is "greater than or equal to 150000 bytes and less than or equal to 200000 bytes". Further, the access network device determines a target buffer size table group from the two buffer size table groups predefined in the communication protocol, and sends the first configuration message to the terminal based on the one-to-one correspondence between the plurality of BS intervals and the plurality of index values that are included in the target buffer size table group. For example, the access network device may learn, based on the data frame size fluctuation range "greater than or equal to 150000 bytes and less than or equal to 200000 bytes", that a largest value of data frames of the to-be-transmitted uplink data (for example, the XR service data) in the buffer of the terminal is 200000 bytes. In this case, the access network device determines the buffer size table group 2 as the target buffer size table group, and sends the first configuration message to the terminal based on a one-to-one correspondence between a plurality ofBS intervals and a plurality of index values that are included in the buffer size table group 2.

S402: The terminal sends a BSR to the access network device based on the correspondence, where the BSR includes a target index value, and the plurality of index values include the target index value.

When the terminal has to-be-sent uplink data, the terminal determines a target BS interval from the plurality of BS intervals based on the one-to-one correspondence between the plurality of BS intervals and the plurality of index values that is configured by using the first configuration message, and determines an index value corresponding to the target BS interval as the target index value. Further, the terminal sends the BSR to the access network device, to request the access network device to configure a corresponding uplink transmission resource for the to-be-sent uplink data, and the terminal sends the uplink data to the access network device based on the uplink transmission resource.

According to the BSR sending method described in FIG. 4, when a plurality of correspondences between BS intervals and index values are predefined in the communication protocol, the access network device may configure, by sending a configuration message to the terminal, a correspondence that is between a BS interval and an index value and that is more suitable for a resource actually required by the terminal, so that a transmission resource requested by the terminal is more suitable for the resource actually required by the terminal, thereby reducing a waste of transmission resources.

In a scenario, because service data of the terminal is carried on an LCG, and LCGs carrying different service data have different transmission indicators (for example, different transmission rates and different data frame size fluctuation), in the BSR sending method provided in FIG. 4 in this application, the one-to-one correspondence between the plurality of BS intervals and the plurality of index values that is configured by using the first configuration message in S401 may be associated with the LCG. That is, it may be understood that, only when the specified LCG has to-be-uploaded data, the terminal sends the BSR to the access network device based on the one-to-one correspondence between the plurality of BS intervals and the plurality of index values that is configured by using the first configuration message.

In a possible implementation in this scenario, the first configuration message in S401 further includes identification information of the LCG. That is, the first configuration message is used to configure the one-to-one correspondence between the plurality of BS intervals and the plurality of index values, and specify an LCG associated with the correspondence. In this case, the first configuration message may include a field 1 and a field 2. The field 1 indicates an LCG identifier (or a value of the field 1 is the LCG ID), and the field 2 indicates a one-to-one correspondence between a plurality of BS intervals and a plurality of index values.

In this possible implementation, the access network device may configure different correspondences based on different LCGs. For example, when an LCG 0 is used to carry data of a service 1, and an LCG 2 is used to carry data of a service 2, the access network device may send a first configuration message to the terminal, where the first configuration message is used to configure a one-to-one correspondence between a plurality of BS intervals and a plurality of index values that is associated with the LCG 0; or the access network device may send a first configuration message to the terminal, where the first configuration message is used to configure a one-to-one correspondence between a plurality of BS intervals and a plurality of index values that is associated with the LCG 2. In this way, a transmission resource requested by using the BSR sent by the terminal is more suitable for a resource actually required by the LCG, thereby reducing a waste of transmission resources.

Further, in another possible implementation, the terminal sends uplink data to the access network, where the uplink data is carried on an LCG, and the LCG is associated with the foregoing correspondence (that is, the correspondence configured by using the first configuration information). That is, it may be understood that after receiving the BSR reported by the terminal, the access network device obtains the target BS interval based on the target index value in the BSR, and configures an uplink transmission resource for the specified LCG based on a value in the target BS interval. Further, the terminal sends, to the access network device based on the uplink transmission resource, the uplink data carried on the specified LCG.

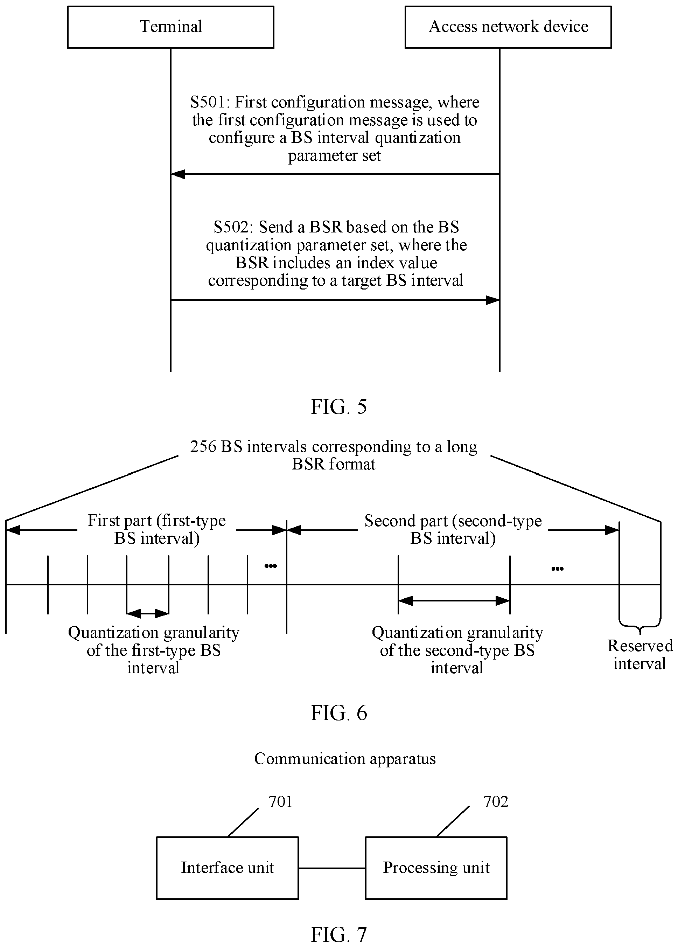

FIG. 5 is a schematic flowchart of another BSR sending method according to an embodiment of this application. FIG. 5 shows the method by using an example in which an access network device and a terminal are used as execution bodies that interact with each other. However, the execution bodies that interact with each other are not limited in this application. For example, the access network device in FIG. 5 may be a chip, a chip system, or a processor that supports the access network device in implementing the method, or may be a logical module or software that can implement all or some functions of the access network device. The terminal in FIG. 5 may be a chip, a chip system, or a processor that supports the terminal in implementing the method, or may be a logical module or software that can implement all or some functions of the terminal.

S501: The terminal receives a first configuration message from the access network device, where the first configuration message is used to configure a BS interval quantization parameter set, and the BS interval quantization parameter set indicates quantization granularities of at least two types of BS intervals.

It should be understood that, in a long BSR format, 8 bits indicate index values of a plurality of BS intervals, and therefore, the long BSR format corresponds to 256 BS intervals; and in a short BSR format, 5 bits indicate index values of a plurality of BS intervals, and therefore, the short BSR format corresponds to 32 BS intervals. The first configuration message is used to configure the BS interval quantization parameter set, and the BS interval quantization parameter set indicates to classify intervals (that is, the 256 BS intervals) corresponding to the long BSR format into at least two types; and/or the BS interval quantization parameter set indicates to classify intervals (that is, the 32 BS intervals) corresponding to the short BSR format into at least two types. A quantization granularity of a type of BS interval refers to a size of each BS interval in the type of BS interval. In a possible implementation, a first-type BS interval and a second-type BS interval are any two of the at least two types of BS intervals, and a quantization granularity of the first-type BS interval is different from a quantization granularity of the second-type BS interval. That is, it may be understood that BS intervals are classified into the at least two types of BS intervals is performed in a non-uniform quantization manner. In this possible implementation, diversity of the BS interval can be improved, thereby improving adaptability between the BS interval and a requirement of the terminal.

The terminal receives the first configuration message sent by the access network device, where the first configuration message is used to configure at least two types of BS intervals and a quantization granularity of each type ofBS interval (or referred to as a size of each BS interval in each type of BS interval). The first configuration message may be an RRC message.

In a possible implementation, the BS interval quantization parameter set includes a quantization granularity of each of the at least two types of BS intervals and a proportion of each type of BS interval in the at least two types of BS intervals. In other words, the BS interval quantization parameter set is used to divide a total quantity of BS intervals into at least two types of BS intervals, a quantization granularity of each type of BS interval, and a proportion of each type of BS interval in the total quantity of BS intervals.

It should be noted that, the total quantity of BS intervals mentioned in this application is a total quantity of BS intervals other than a reserved BS interval. There may be one or more reserved BS intervals, and a value range corresponding to the reserved BS interval is an open interval "greater than a largest value in the total quantity of BS intervals". For example, if there is one reserved BS interval, a total quantity of BS intervals in the long BSR format refers to 255 BS intervals (for example, BS intervals whose index values are 0 to 254) other than the reserved BS interval, and a total quantity of BS intervals in the short BSR format refers to 31 BS intervals (for example, BS intervals whose index values are 0 to 30) other than the reserved BS interval. In an example of this application, descriptions are provided by using an example in which there is one reserved BS interval, and this cannot be considered as a specific limitation on a quantity of reserved BS intervals in this application.

Descriptions are provided below by using an example in which there is one reserved BS interval, and the BS interval quantization parameter set is used to classify the 256 BS intervals corresponding to the long BSR format into at least two types of BS intervals and one reserved BS interval.

For example, FIG. 6 is a diagram of a BS interval obtained based on a BS interval quantization parameter set. In FIG. 6, a BS interval quantization parameter set in a first configuration message is used to classify 256 BS intervals corresponding to a long BSR format into two parts (that is, two types of BS intervals) and one reserved BS interval: A first part (which may also be referred to as a first-type BS interval) includes first 100 BS intervals (that is, BS intervals whose index values are 0 to 99) in the 256 BS intervals, a second part (which may also be referred to as a second-type BS interval) includes last 155 BS intervals (that is, BS intervals whose index values are 100 to 254) in the 255 BS intervals, and a BS interval whose index value is 255 is determined as the reserved BS interval. The BS interval quantization parameter set indicates that a quantization granularity of the first-type BS interval is 500 bytes, and a quantization granularity of the second-type BS interval is 2000 bytes. That is, it may be understood that a size of each BS interval (or referred to as a length of each BS interval) in the first part of BS intervals is 500 bytes, and a size of each BS interval (or referred to as a length of each BS interval) in the second part of BS intervals is 2000 bytes. A range of a BS interval whose index value is 254 is "greater than 358000 bytes and less than or equal to 360000 bytes", and a value range corresponding to the reserved BS interval is "greater than 360000 bytes".

In a possible implementation, the BS interval quantization parameter set includes a BS interval quantization parameter set corresponding to the long BSR and/or a BS interval quantization parameter set corresponding to the short BSR. In other words, the BS interval quantization parameter configured by using the first configuration message may be any one of the following three cases.

Case 1: The BS interval quantization parameter set configured by using the first configuration message is the BS interval quantization parameter set corresponding to the long BSR.

In this case, it may be considered that the first configuration message is used to configure only a quantization granularity of each of the at least two types of BS intervals and a proportion of each type of BS interval in the 256 BS intervals when the BSR is in a format of the long BSR.

Case 2: The BS interval quantization parameter set configured by using the first configuration message is the BS interval quantization parameter set corresponding to the short BSR.

In this case, it may be considered that the first configuration message is used to configure only a quantization granularity of each of the at least two types of BS intervals and a proportion of each type of BS interval in the 32 BS intervals when the BSR is in a format of the short BSR.

Case 3: The BS interval quantization parameter set configured by using the first configuration message includes both the BS interval quantization parameter set corresponding to the long BSR and the BS interval quantization parameter set corresponding to the short BSR.

In this case, it may be considered that the first configuration message is used to configure a quantization granularity of each type of BS interval corresponding to the long BSR and a proportion of each type of BS interval in the 256 BS intervals when the BSR is in a format of the long BSR, and also configure a quantization granularity of each type of BS interval corresponding to the short BSR and a proportion of each type of BS interval in the 32 BS intervals when the BSR is in a format of the short BSR.

In a scenario, because to-be-uploaded uplink data in a buffer has data frame statistical information corresponding to service data, the BS interval quantization parameter set in the first configuration message is determined based on data frame statistical information corresponding to different service data, so that adaptation between a transmission resource requested by the terminal by using the BSR and a resource actually required by the terminal can be further improved. The data frame statistical information includes but is not limited to one or more of an average value of data frame sizes, a standard deviation of data frame sizes, a largest value of data frame sizes, or a smallest value of data frame sizes.

In a possible implementation in this scenario, before the terminal receives the first configuration message from the access network device, the terminal sends a report message to the access network device, where the report message includes data frame statistical information, and the data statistical information is used to determine the BS interval quantization parameter set. The report message is a type of RRC message. For example, the report message may be UAI signaling.

For example, the terminal sends UAI signaling to the access network device, where the UAI signaling indicates data frame statistical information of to-be-transmitted uplink data (for example, XR service data) in a buffer of the terminal: XR data frame size distribution is a truncated Gaussian distribution that follows an average value of 500000 bytes, a standard deviation of 52500 bytes, a largest value of 750000 bytes, and a smallest value of 250000 bytes. Further, the access network device determines, based on the data frame statistical information of the XR service data, that a probability that a data frame in the XR service is greater than 560000 bytes is approximately less than 14%. Based on this, the access network device sends the first configuration message to the terminal, where the first configuration message includes the BS interval quantization parameter set, and BS intervals configured by using the BS interval quantization parameter set includes a BS interval corresponding to a long BSR format and a BS interval corresponding to a short BSR format. For the BS interval corresponding to the long BSR format, the access network device may classify 255 intervals other than a reserved BS interval into two parts (that is, two types of BS intervals), where a first-type BS interval (that is, a first part) occupies 224 BS intervals (that is, BS intervals whose index values are 0 to 223), a quantization granularity of the first-type BS interval (that is, a size of each first-type BS interval) is 2500 bytes, a second-type BS interval (that is, a second part) occupies 31 BS intervals (that is, BS intervals whose index values are 224 to 254), and a quantization granularity of the second-type BS interval (that is, a size of each second-type BS interval) is 6000 bytes. For the BS interval corresponding to the short BSR format, the access network device may classify 31 intervals other than a reserved BS interval into two parts (that is, two types of BS intervals), where a first-type BS interval (that is, a first part) occupies 25 BS intervals (that is, BS intervals whose index values are 0 to 24), a quantization granularity of the first-type BS interval (that is, a size of each first-type BS interval) is 10000 bytes, a second-type BS interval (that is, a second part) occupies 6 BS intervals (that is, BS intervals whose index values are 25 to 30), and a quantization granularity of the second-type BS interval (that is, a size of each second-type BS interval) is 50000 bytes.

S502: The terminal sends a BSR to the access network device based on the BS quantization parameter set, where the BSR includes an index value corresponding to a target BS interval, and the at least two types ofBS intervals include the target BS interval.

When the terminal has to-be-sent uplink data, the terminal determines the target BS interval from the at least two types of BS intervals based on the at least two types of BS intervals configured by using the BS quantization parameter set in the first configuration message, and sends the BSR to the access network device based on the index value corresponding to the target BS interval, to request the access network device to configure a corresponding uplink transmission resource for the to-be-sent uplink data; and the terminal sends the uplink data to the access network device based on the uplink transmission resource.

According to the BSR sending method described in FIG. 5, the access network device may configure, by sending a configuration message to the terminal, a correspondence that is between a BS interval and an index value and that is more suitable for a resource actually required by the terminal, so that a transmission resource requested by the terminal is more suitable for the resource actually required by the terminal, thereby reducing a waste of transmission resources.

In a scenario, because service data of the terminal is carried on an LCG, and service data carried on different LCGs may have different data frame statistical information, in the BSR sending method provided in FIG. 5 in this application, the BS interval quantization parameter set configured by using the first configuration message in S501 may be associated with the LCG. That is, it may be understood that, only when the specified LCG has to-be-uploaded data, the terminal sends the BSR to the access network device based on the BS interval quantization parameter set configured by using the first configuration message. In this possible implementation, different LCGs of the terminal may be associated with different BS interval quantization parameter sets, so that a matching degree between an LCG transmission requirement of the terminal and a BS interval can be improved.

In a possible implementation in this scenario, the first configuration message in S501 further includes identification information of the LCG. That is, the first configuration message is used to configure the BS interval quantization parameter set and specify the LCG associated with the BS interval quantization parameter set. In this case, the first configuration information may include a field 3, a field 4, and a field 5. The field 3 indicates an LCG identifier (or a value of the field 3 is an LCG ID), the field 4 indicates a quantization granularity of each of at least two types of BS intervals, and the field 5 indicates a proportion of each type of BS interval in the at least two types ofBS intervals.

Further, in another possible implementation, the terminal sends uplink data to the access network device, where the uplink data is carried on an LCG, and the LCG is associated with the BS interval quantization parameter set. That is, it may be understood that after receiving the BSR reported by the terminal, the access network device obtains the target BS interval based on the index value in the BSR, and configures an uplink transmission resource for the specified LCG based on a value in the target BS interval. Further, the terminal sends, to the access network device based on the uplink transmission resource, the uplink data carried on the specified LCG.

FIG. 7 is a diagram of a structure of a communication apparatus according to an embodiment of this application. The communication apparatus shown in FIG. 7 may be configured to implement some or all functions of the terminal in the embodiment corresponding to the BSR sending method, or the communication apparatus shown in FIG. 7 may be configured to implement some or all functions of the access network device in the embodiment corresponding to the BSR method.

In an embodiment, the communication apparatus shown in FIG. 7 may be configured to implement some or all functions of the terminal in the method embodiment in FIG. 4 or FIG. 5. For example, the apparatus may be a terminal, or may be a chip, a chip system, a processor, or the like that supports the terminal in implementing the foregoing method, or may be a logical module or software that can implement all or some functions of the terminal. The communication apparatus shown in FIG. 7 may include an interface unit 701 and a processing unit 702.

The interface unit 701 is configured to receive a first configuration message from an access network device, where the first configuration message is used to configure a one-to-one correspondence between a plurality of buffer status BS intervals and a plurality of index values.

The processing unit 702 is configured to control, based on the correspondence, the communication apparatus to send a buffer status report BSR to the access network device, where the BSR includes a target index value, and the plurality of index values include the target index value.

In a possible implementation, the interface unit 701 is further configured to send uplink data to the access network device, where the uplink data is carried on a logical channel group LCG, and the LCG is associated with the correspondence.

In a possible implementation, the first configuration message further includes identification information of the LCG.

In a possible implementation, the plurality of BS intervals include a BS interval corresponding to a long BSR and/or a BS interval corresponding to a short BSR.

In a possible implementation, the correspondence is included in a buffer size table corresponding to the long BSR and/or a buffer size table corresponding to the short BSR.

In a possible implementation, the interface unit 701 is further configured to send a report message to the access network device, where the report message indicates a data frame size fluctuation range, and the data frame size fluctuation range is used to determine the correspondence.

In another embodiment, the communication apparatus shown in FIG. 7 may be configured to implement some or all functions of the terminal in the method embodiment in FIG. 4 or FIG. 5. For example, the apparatus may be a terminal, or may be a chip, a chip system, a processor, or the like that supports the terminal in implementing the foregoing method, or may be a logical module or software that can implement all or some functions of the terminal. The communication apparatus shown in FIG. 7 may include an interface unit 701 and a processing unit 702.

The interface unit 701 is configured to receive a first configuration message from an access network device, where the first configuration message is used to configure a BS interval quantization parameter set, and the BS interval quantization parameter set indicates quantization granularities of at least two types of BS intervals.

The processing unit 702 is configured to control, based on the target BS quantization parameter set, the communication apparatus to send a BSR to the access network device, where the BSR includes an index value corresponding to a target BS interval, and the at least two types ofBS intervals include the target BS interval.

In a possible implementation, the interface unit 701 is further configured to send uplink data to the access network device, where the uplink data is carried on a logical channel group LCG, and the LCG is associated with the BS interval quantization parameter set.

In a possible implementation, the first configuration message further includes identification information of the LCG.

In a possible implementation, the BS interval quantization parameter set includes a quantization granularity of each of the at least two types of BS intervals and a proportion of each type of BS interval in the at least two types ofBS intervals.

In a possible implementation, the BS interval quantization parameter set includes a BS interval quantization parameter set corresponding to a long BSR and/or a BS interval quantization parameter set corresponding to a short BSR.

In a possible implementation, the interface unit 701 is further configured to send a report message to the access network device, where the report message includes data frame statistical information, and the data statistical information is used to determine the BS interval quantization parameter set. The data frame statistical information includes but is not limited to one or more of an average value of data frame sizes, a standard deviation of data frame sizes, a largest value of data frame sizes, or a smallest value of data frame sizes.

In still another embodiment, the communication apparatus shown in FIG. 7 may be configured to implement some or all functions of the access network device in the method embodiment in FIG. 4 or FIG. 5. The apparatus may be an access network device, or may be a chip, a chip system, a processor, or the like that supports the access network device in implementing the foregoing method, or may be a logical module or software that can implement all or some functions of the access network device. The communication apparatus may alternatively be a chip system. The communication apparatus shown in FIG. 7 may include an interface unit 701 and a processing unit 702.

The interface unit 701 is configured to: send a first configuration message to a terminal, where the first configuration message is used to configure a one-to-one correspondence between a plurality of buffer status BS intervals and a plurality of index values; and receive a BSR from the terminal, where the BSR includes a target index value, and the plurality of index values include the target index value.

In a possible implementation, the interface unit 701 is further configured to receive uplink data from the terminal, where the uplink data is carried on a logical channel group LCG, and the LCG is associated with the correspondence.

In a possible implementation, the first configuration message further includes identification information of the LCG.

In a possible implementation, the plurality of BS intervals include a BS interval corresponding to a long BSR and/or a BS interval corresponding to a short BSR.

In a possible implementation, the correspondence is included in a buffer size table corresponding to the long BSR and/or a buffer size table corresponding to the short BSR.

In a possible implementation, the interface unit 701 is further configured to receive a report message from the terminal, where the report message indicates a data frame size fluctuation range.

In a possible implementation, the processing unit 702 is configured to determine the correspondence based on the data frame size fluctuation range.

In yet another embodiment, the communication apparatus shown in FIG. 7 may be configured to implement some or all functions of the access network device in the method embodiment in FIG. 4 or FIG. 5. The apparatus may be an access network device, or may be a chip, a chip system, a processor, or the like that supports the access network device in implementing the foregoing method, or may be a logical module or software that can implement all or some functions of the access network device. The communication apparatus may alternatively be a chip system. The communication apparatus shown in FIG. 7 may include an interface unit 701 and a processing unit 702.

The interface unit 701 is configured to: send a first configuration message to a terminal, where the first configuration message is used to configure a BS interval quantization parameter set, and the BS interval quantization parameter set indicates quantization granularities of at least two types of BS intervals; and receive a BSR from the terminal, where the BSR includes an index value corresponding to a target BS interval, and the at least two types of BS intervals include the target BS interval.

In a possible implementation, the interface unit 701 is further configured to receive uplink data from the terminal, where the uplink data is carried on a logical channel group LCG, and the LCG is associated with the BS interval quantization parameter set.

In a possible implementation, the first configuration message further includes identification information of the LCG.

In a possible implementation, the BS interval quantization parameter set includes a quantization granularity of each of the at least two types of BS intervals and a proportion of each type of BS interval in the at least two types ofBS intervals.

In a possible implementation, the BS interval quantization parameter set includes a BS interval quantization parameter set corresponding to a long BSR and/or a BS interval quantization parameter set corresponding to a short BSR.

In a possible implementation, the interface unit 701 is further configured to receive a report message from the terminal, where the report message includes data frame statistical information, and the data statistical information includes but is not limited to one or more of an average value of data frame sizes, a standard deviation of data frame sizes, a largest value of data frame sizes, or a smallest value of data frame sizes.

In a possible implementation, the processing unit 702 is configured to determine the BS interval quantization parameter set based on the data frame statistical information.

For more detailed descriptions of the interface unit 701 and the processing unit 702, refer to related descriptions of the terminal or the access network device in the foregoing method embodiments. Details are not described herein again.

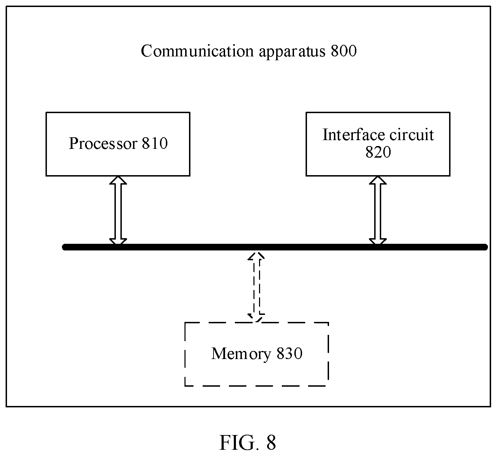

FIG. 8 is a diagram of structure of a communication apparatus 800 according to this application. The communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, or store input data required by the processor 810 to run the instructions, or store data generated after the processor 810 runs the instructions.

When the communication apparatus 800 is configured to implement the method in the foregoing method embodiments, the processor 810 is configured to perform a function of the processing unit 702, and the interface circuit 820 is configured to perform a function of the interface unit 701.

When the communication apparatus is a chip used in a terminal, the chip in the terminal implements a function of the terminal in the foregoing method embodiments, and the terminal chip receives information from another network element; or the terminal chip sends information to another network element.

When the communication apparatus is a chip used in an access network device, the chip in the access network device implements a function of the access network device in the foregoing method embodiments. The chip in the access network device receives information from another network element; or the chip in the access network device sends information to another network element.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented by hardware, or may be implemented by the processor executing software instructions. The software instructions may include a corresponding software module. The software module may be stored in a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device or a terminal. Certainly, the processor and the storage medium may also exist in the terminal or the access network device as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, or other programmable apparatuses. The computer programs or instructions may be stored in a computer-readable storage medium, or may be transmitted through the computer-readable storage medium. The computer-readable storage medium may be any usable medium that can be accessed by a computer, or a data storage device, such as a server, integrating one or more usable media. The usable medium may be a magnetic medium, for example, a floppy disk, a hard disk, or a magnetic tape; or may be an optical medium, for example, a DVD; or may be a semiconductor medium, for example, a solid-state drive (solid-state drive, SSD).

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

An embodiment of this application further provides a computer-readable storage medium. The computer-readable storage medium stores computer-executable instructions. When the computer-executable instructions are executed, the method performed by the terminal or the access network device in the foregoing method embodiments is implemented.

An embodiment of this application further provides a computer program product. The computer program product includes a computer program. When the computer program is executed, the method performed by the terminal or the access network device in the foregoing method embodiments is implemented.

An embodiment of this application further provides a communication system. The communication system includes a terminal or an access network device. The terminal is configured to perform the method performed by the terminal in the foregoing method embodiments. The access network device is configured to perform the method performed by the access network device in the foregoing method embodiments.

It should be noted that, for brief description, the foregoing method embodiments are represented as a series of actions. However, persons skilled in the art should understand that this application is not limited to the described order of the actions, because according to this application, some steps may be performed in other orders or simultaneously. In addition, persons skilled in the art should also appreciate that all the embodiments described in this specification are example embodiments, and the related actions and modules are not necessarily required by this application.

Descriptions of embodiments provided in this application may refer to each other, and descriptions of embodiments has different focuses. For a part that is not described in detail in an embodiment, refer to related descriptions in another embodiment. For ease of description and brevity, for functions and performed steps of the apparatuses and devices provided in embodiments of this application, refer to related descriptions in the method embodiments of this application. Mutual reference, combination, or reference may be made between the method embodiments and between the apparatus embodiments.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A buffer status report sending method, wherein the method comprises:
receiving a first configuration message from an access network device, wherein the first configuration message is used to configure a one-to-one correspondence between a plurality of buffer status BS intervals and a plurality of index values; and
sending a buffer status report BSRto the access network device based on the correspondence, wherein the BSR comprises a target index value, and the plurality of index values comprise the target index value.

2. The method according to claim 1, wherein the method further comprises:
sending uplink data to the access network device, wherein the uplink data is carried on a logical channel group LCG, and the LCG is associated with the correspondence.

3. The method according to claim 2, wherein the first configuration message further comprises identification information of the LCG.

4. The method according to any one of claims 1 to 3, wherein
the plurality of BS intervals comprise a BS interval corresponding to a long BSR and/or a BS interval corresponding to a short BSR.

5. The method according to any one of claims 1 to 4, wherein
the correspondence is comprised in a buffer size table corresponding to the long BSR and/or a buffer size table corresponding to the short BSR.

6. The method according to any one of claims 1 to 5, wherein the method further comprises:
sending a report message to the access network device, wherein the report message indicates a data frame size fluctuation range, and the data frame size fluctuation range is used to determine the correspondence.

7. A buffer status report receiving method, wherein the method comprises:
sending a first configuration message to a terminal, wherein the first configuration message is used to configure a one-to-one correspondence between a plurality of buffer status BS intervals and a plurality of index values; and
receiving a buffer status report BSR from the terminal, wherein the BSR comprises a target index value, and the plurality of index values comprise the target index value.

8. The method according to claim 7, wherein the method further comprises:
receiving uplink data from the terminal, wherein the uplink data is carried on a logical channel group LCG, and the LCG is associated with the correspondence.

9. The method according to claim 8, wherein the first configuration message further comprises identification information of the LCG.

10. The method according to any one of claims 7 to 9, wherein
the plurality of BS intervals comprise a BS interval corresponding to a long BSR and/or a BS interval corresponding to a short BSR.

11. The method according to any one of claims 7 to 10, wherein
the correspondence is comprised in a buffer size table corresponding to the long BSR and/or a buffer size table corresponding to the short BSR.

12. The method according to any one of claims 7 to 11, wherein the method further comprises:
receiving a report message from the terminal, wherein the report message indicates a data frame size fluctuation range.

13. The method according to claim 12, wherein the method further comprises:
determining the correspondence based on the data frame size fluctuation range.

14. A communication apparatus, wherein the communication apparatus comprises:
an interface unit, configured to receive a first configuration message from an access network device, wherein the first configuration message is used to configure a one-to-one correspondence between a plurality of buffer status BS intervals and a plurality of index values; and
a processing unit, configured to control, based on the correspondence, the apparatus to send a buffer status report BSR to the access network device, wherein the BSR comprises a target index value, and the plurality of index values comprise the target index value.

15. The apparatus according to claim 14, wherein
the interface unit is further configured to send uplink data to the access network device, wherein the uplink data is carried on a logical channel group LCG, and the LCG is associated with the correspondence.

16. The apparatus according to claim 15, wherein the first configuration message further comprises identification information of the LCG.

17. The apparatus according to any one of claims 14 to 16, wherein
the plurality of BS intervals comprise a BS interval corresponding to a long BSR and/or a BS interval corresponding to a short BSR.

18. The apparatus according to any one of claims 14 to 17, wherein
the correspondence is comprised in a buffer size table corresponding to the long BSR and/or a buffer size table corresponding to the short BSR.

19. The apparatus according to any one of claims 14 to 18, wherein
the interface unit is further configured to send a report message to the access network device, wherein the report message indicates a data frame size fluctuation range, and the data frame size fluctuation range is used to determine the correspondence.

20. A communication apparatus, wherein the communication apparatus comprises:
an interface unit, configured to: send a first configuration message to a terminal, wherein the first configuration message is used to configure a one-to-one correspondence between a plurality of buffer status BS intervals and a plurality of index values; and receive a buffer status report BSR from the terminal, wherein the BSR comprises a target index value, and the plurality of index values comprise the target index value.

21. The apparatus according to claim 20, wherein
the interface unit is further configured to receive uplink data from the terminal, wherein the uplink data is carried on a logical channel group LCG, and the LCG is associated with the correspondence.

22. The apparatus according to claim 21, wherein the first configuration message further comprises identification information of the LCG.

23. The apparatus according to any one of claims 20 to 22, wherein
the plurality of BS intervals comprise a BS interval corresponding to a long BSR and/or a BS interval corresponding to a short BSR.

24. The apparatus according to any one of claims 20 to 23, wherein
the correspondence is comprised in a buffer size table corresponding to the long BSR and/or a buffer size table corresponding to the short BSR.

25. The apparatus according to any one of claims 20 to 24, wherein
the interface unit is further configured to receive a report message from the terminal, wherein the report message indicates a data frame size fluctuation range.

26. The apparatus according to claim 25, wherein the communication apparatus further comprises a processing unit, wherein
the processing unit is configured to determine the correspondence based on the data frame size fluctuation range.

27. A communication apparatus, comprising a processor, wherein the processor is coupled to a memory, the memory is configured to store a program or instructions, and when the program or the instructions are executed by the processor, the apparatus is enabled to perform the method according to any one of claims 1 to 6, or the apparatus is enabled to perform the method according to any one of claims 7 to 13.

28. A computer-readable storage medium, wherein the storage medium stores a computer program or instructions, and when the computer program or the instructions are executed, the method according to any one of claims 1 to 6 or the method according to any one of claims 7 to 13 is implemented.

29. A computer program product, comprising computer program code, wherein when the computer program code is run, the method according to any one of claims 1 to 6 or the method according to any one of claims 7 to 13 is implemented.

30. A communication system, comprising the apparatus according to any one of claims 14 to 19 and the apparatus according to any one of claims 20 to 26.
